# EUROPEAN PATENT SPECIFICATION

(11) **EP 3 160 831 B1**
(45) Date of publication and mention of the grant of the patent: **24.04.2019**
(21) Application number: 15760523.9
(22) Date of filing: 24.06.2015
(51) Int. Cl.: B62D 35/02

(54) **AN UNDERVEHICLE AERODYNAMIC PANEL**
AERODYNAMISCHE FAHRZEUGBODENPLATTE
PANNEAU AÉRODYNAMIQUE POUR DESSOUS DE VÉHICULE

(30) Priority: 24.06.2014 TR 201407341
(43) Date of publication of application: 03.05.2017
(73) Proprietor: Tofas Turk Otomobil Fabrikasi Anonim Sirketi, Bursa (TR)
(72) Inventor: TUTAR, Engin, 16369 Bursa (TR); CIL, Caner, 16369 Bursa (TR)
(74) Representative: Dericioglu Kurt, Ekin
(86) International application number: PCT/TR2015/000261
(87) International publication number: WO 2015/199631

(56) References cited:
- WO-A2-2014/072598
- FR-A1- 2 975 659
- JP-A- 2000 177 652
- JP-A- 2004 090 687
- JP-A- 2008 030 512
- JP-U- H0 480 778
- US-A1- 2005 067 204

## Description

### Field of the Invention

The present invention relates to an aerodynamic panel which reduces air friction generated under the vehicle during driving and thus provides fuel saving in the vehicles when mounted on the lower base of a motor vehicle.

### Background of the Invention

The aerodynamic panel enables the lower bases of the vehicles to have a smooth surface by being mounted on this part, and thus enables the friction occurring due to air during driving to be reduced. Upon the decrease in friction, the vehicle can move more comfortably and fuel saving is achieved. The wider the surface area of the said panel is, the more the losses can be reduced. However, the arms on the assembly line and even carrying the vehicle during production of the vehicle can prevent the panel from being mounted under the vehicle. For this reason, several empty areas through which the carrying arms can pass should be present on the aerodynamic panel.

United States Patent Document no US2013200656, and JP2008030512 an application known in the state of the art, discloses an aerodynamic panel. The said aerodynamic panel is coupled to a thermal shield including a plurality of expansion joints. By means of the said thermal shield, the aerodynamic panel is not affected by the heat changes from the engine and the exhaust. Furthermore, there is a opening for enabling easy mounting.

There is no study about reducing the openings that should be on the aerodynamic panels designed today after the production of the vehicle.

### Summary of the Invention

The objective of the present invention is to provide an under vehicle aerodynamic panel which reduces friction during driving.

Another objective of the present invention is to provide an under vehicle aerodynamic panel which has an opening thereon such that it will not prevent the carrying arms from functioning.

A further objective of the present invention is to provide an under vehicle aerodynamic panel comprising an additional panel which enables the opening to be made smaller by being added to the panel after the assembly of the vehicle is completed.

### Detailed Description of the Invention

An under vehicle aerodynamic panel developed to fulfill the objective of the present invention is illustrated in the accompanying figures, in which:
Figure 1 is the perspective view of one embodiment of the inventive under vehicle aerodynamic panel.
Figure 2 is the perspective view of the additional panel attached to the body of the inventive aerodynamic panel.
Figure 3 is the perspective view of the additional panel attached to the body of the inventive aerodynamic panel in folded state.
Figure 4 is the perspective view of folding tab and folding hole of the inventive aerodynamic panel.
Figure 5 is the perspective view of fixing tab on the body of the inventive aerodynamic panel.
Figure 6 is the lateral cross-sectional view of the additional panel attached to the body of the inventive aerodynamic panel in folded state.

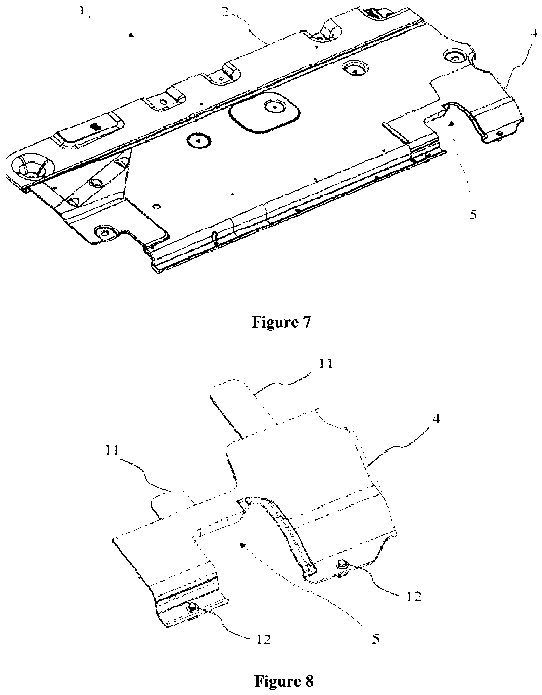

Figure 7 is the perspective view of another embodiment of the inventive under vehicle aerodynamic panel.
Figure 8 is the top perspective view of the additional panel of the inventive aerodynamic panel.
Figure 9 is the bottom perspective view of the body and the additional panel of the inventive aerodynamic panel.
Figure 10 is the bottom perspective view of the additional panel attached to the body of the inventive aerodynamic panel.

The components shown in the figures are each given reference numerals as follows:
1. Under vehicle aerodynamic panel
2. Body
3. Emptied area
4. Additional panel
5. Opening
6. Folding tab
7. Folding hole
8. Fixing tab
9. Fixing hole
10. Aquaplaning member
11. Extension
12. Mounting member

The inventive under vehicle aerodynamic panel (1) essentially comprises:
- at least one body (2) which covers the bottom of the vehicle,
- at least one emptied area (3) which enables the carrying arms to hold on to the vehicle when the vehicle is on the assembly line, and which is located on the body (2),
- at least one additional panel (4) which is placed on the emptied area (3) on the body (2) after the vehicles goes out of the production line,
- at least one opening (5) which is located on the additional panel (4) and which allows the car lifter being placed under the vehicle,
- at least one mounting member (12) which enables the additional panel (4) to be fixed on the body (2).

The body (2) is in form of a plate which reduces air friction created under the vehicle during driving by being mounted on the lower base of the vehicle, and thus enables fuel saving. By means of the emptied area (3) present on the body (2), the carrying arms pass inside the body (2) while the assembly of the vehicle continues, and thus the vehicle is moved. Such area (3) on the body (2) is required in this respect.

The additional panel (4) is in form of a removable plate which is used in filling the emptied area (3) formed on the body (2) after the production. Therefore, the surface area of the inventive aerodynamic panel (1) is expanded more and the fuel saving can be increased.

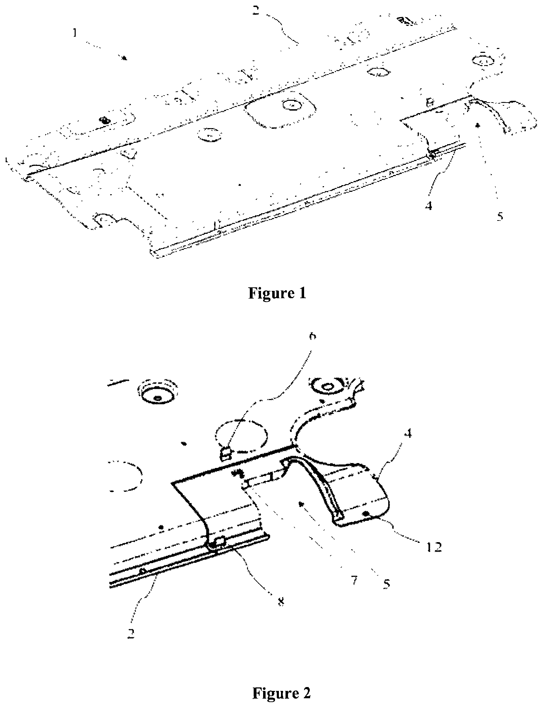

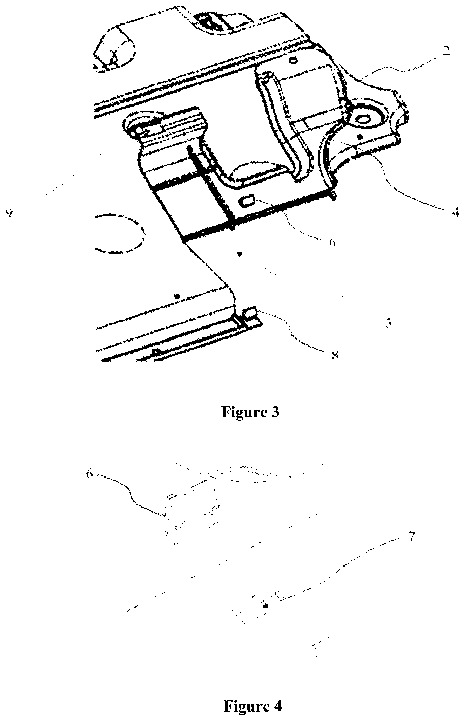

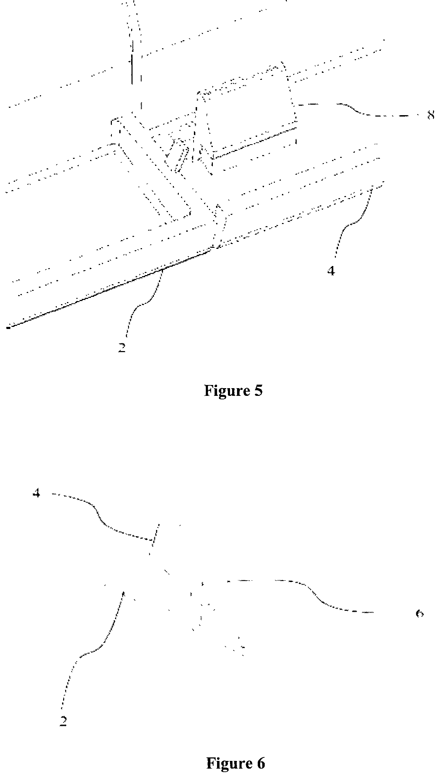

In one embodiment of the invention, the additional panel (4) can be folded towards the upper surface of the body (2), and it can be fixed in this way. In this embodiment of the invention, at least one folding tab (6) provided on the body (2) engages into at least one folding hole (7) provided on the additional panel (4) and holds on to the additional panel (4), therefore the additional panel (4) enabled to be fixed on the body (2) reversely (Figure 3 and 6). When the said additional panel (4) is connected with the body (2) in order to expand the surface area of the panel (1), the fixing member (8) provided on the body (2) engages into the fixing hole (9) on the additional panel (4). Furthermore, the mounting of the additional panel (4) to the body (2) is realized via at least one mounting member (12) (Figure 2).

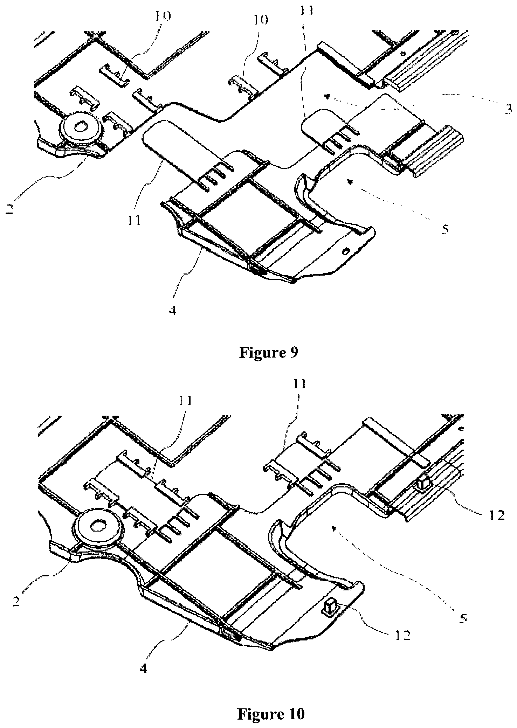

In another embodiment of the invention, there is at least one extension (11) on the additional panel (2) and at least one aquaplaning member (10) on the body (2) in a form such that the said extension (11) can pass through. The extension (11) is in shape of a planar protrusion extending as connected to the additional panel (4). The aquaplaning member (10) has the same thickness with the extension (11), and it is in form of a slipping channel which enables the extension (11) to be held here when it is pushed inside. Upon the extension (11) passes through the aquaplaning member (10), the additional panel (4) is connected with the body (2). In the preferred embodiment of the invention, there are two extensions (11) and two aquaplaning members (10) (Figures 9 and 10). After the extensions (11) are placed on the aquaplaning members (10), the additional panel (4) is enabled to be fixed by mounting on the body (2) via the mounting members (12). In the preferred embodiment of the invention, there are two mounting members (12) and they are in form of bolts.

The inventive under vehicle aerodynamic panel (1) the surface area of which can be expanded by means of the removable additional panel (4) creates a planar structure under the vehicle, and thus reduces the friction force of the air passing under the vehicle during driving. Therefore, the power needed for the vehicle to move also decreases, and fuel saving can be provided.

## Claims

1. An under vehicle aerodynamic panel (1), which is mounted on lower base of a motor vehicle, **comprising**
- at least one body (2) which covers the bottom of the vehicle,
- at least one emptied area (3) which enables the carrying arms to hold on to the vehicle and which is located on the edge of body (2) the body (2), and **characterized by**
- at least one additional panel (4) which is placed on the emptied area (3) on the body (2)
- at least one opening (5) which is located on the additional panel (4) and which allows the car lifter being placed under the vehicle,
- at least one mounting member (12) which enables the additional panel (4) to be fixed on the body (2),
- at least one extension (11) which is in shape of a planar protrusion extending as connected to the additional panel (4),
an aquaplaning member (10) which is in form of a slipping channel and which is located on the body (2).

2. An under vehicle aerodynamic panel (1) according toclaim 1, **characterized by** additional panel (4) which comprises at least one folding hole (7) and which can be fixed by being folded towards the upper surface of the body (2).

3. An under vehicle aerodynamic panel (1) according to claim 2, **characterized by** body (2) which comprises at least one folding tab (6) holding on to the additional panel (4) by passing through the folding hole (7), and thus enabling the additional panel (4) to be fixed in this way after being folded towards the upper surface of the body (2).

4. An under vehicle aerodynamic panel (1) according to any one of the claims 2 and 3, **characterized by** additional panel (4) which comprises at least one fixing hole (9).

5. An under vehicle aerodynamic panel (1) according to any one of the claims 4 to 6, **characterized by** body (2) which comprises at least one fixing tab (8) enabling the additional panel (4) and the body (2) to be connected by passing through the fixing hole (9), and thus enabling to expand the surface area.

6. An under vehicle aerodynamic panel (1) according to any one of the claims 2 to 5, **characterized by** at least one mounting member (12) which enables the additional panel (4) to be mounted on the body (2).

7. An under vehicle aerodynamic panel (1) according to claim 1, **characterized by** at least one mounting member (12) which enables the additional panel (4) to be mounted after it is connected to the body (2).

## Patentansprüche

1. Aerodynamische Unterbodenplatte (1), die auf der unteren Basis eines Kraftfahrzeugs montiert ist, **umfassend**
- mindestens eine Körper (2), die den Boden des Fahrzeugs abdeckt,
- mindestens einen entleerten Bereich (3), der es den Tragarmen ermöglicht, sich am Fahrzeug festzuhalten, und der sich am Rand der Körper (2) der Körper (2) befindet, **gekennzeichnet durch**
- mindestens eine zusätzliche Platte (4), die auf dem entleerten Bereich (3) des Körpers (2) angeordnet ist
- mindestens eine Öffnung (5), die sich auf der zusätzliche Platte (4) befindet und die es ermöglicht, den Autoheber unter das Fahrzeug zu stellen,
- mindestens ein Montageelement (12), das es ermöglicht, die zusätzliche Platte (4) an dem Körper (2) zu befestigen,
- mindestens eine Verlängerung (11), die die Form eines planaren Vorsprungs hat, der sich in Verbindung mit der zusätzlichen Platte (4) erstreckt,
ein Aquaplaning-Element (10), das in Form eines Gleitkanals geformt ist und sich auf dem Körper (2) befindet.

2. Aerodynamische Unterbodenplatte (1) nach Anspruch 1, **gekennzeichnet durch** eine zusätzliche Platte (4), die mindestens ein Klapploch (7) umfasst und die durch Falten zur Oberseite der Körper (2) hin fixierbar ist.

3. Aerodynamische Unterbodenplatte (1) nach Anspruch 2, **gekennzeichnet durch** einen Körper (2), der mindestens eine Klapplasche (6) umfasst, die sich an der zusätzlichen Platte (4) festhält, indem sie durch das Klapploch (7) hindurchgeht, und somit die Befestigung der zusätzlichen Platte (4) auf diese Weise ermöglicht, nachdem sie zur Oberseite der Körper (2) gefaltet wurde.

4. Aerodynamische Unterbodenplatte (1) nach einem der Ansprüche 2 und 3, **gekennzeichnet durch** eine zusätzliche Platte (4), die mindestens ein Befestigungsloch (9) aufweist.

5. Aerodynamische Unterbodenplatte (1) nach einem der Ansprüche 4 bis 6, **gekennzeichnet durch** einen Körper (2), der mindestens eine Befestigungslasche (8) aufweist, die es ermöglicht, die zusätzliche Platte (4) und den Körper (2) durch Durchdringen der Befestigungsloch (9) zu verbinden und so eine Vergrößerung der Oberfläche zu ermöglichen.

6. Aerodynamische Unterbodenplatte (1) nach einem der Ansprüche 2 bis 5, **gekennzeichnet durch** mindestens ein Montageelement (12), das die Montage der zusätzlichen Platte (4) an der Körper (2) ermöglicht.

7. Aerodynamische Unterbodenplatte (1) nach Anspruch 1, **gekennzeichnet durch** mindestens ein Montageelement (12), das die Montage der zusätzlichen Platte (4) ermöglicht, nachdem sie mit der Körper (2) verbunden ist.

## Revendications

1. Panneau aérodynamique sous le véhicule (1), qui est monté sur la base inférieure d'un véhicule automobile, **comprenant**
- au moins un corps (2) qui recouvre la partie inférieure du véhicule,
- au moins une zone vide (3) qui permet aux bras porteurs de s'accrocher au véhicule et qui est située sur le bord du corps (2) du corps (2), et **caractérisé par**
- au moins un panneau supplémentaire (4) qui est placé sur la zone vide (3) sur le corps (2)
- au moins une ouverture (5) qui est située sur le panneau supplémentaire (4) et qui permet de placer l'élévateur sous le véhicule,
- au moins un élément de montage (12) qui permet de fixer le panneau supplémentaire (4) sur le corps (2),
- au moins une extension (11) qui a la forme d'une saillie plane s'étendant en liaison avec le panneau supplémentaire (4),
un élément d'aquaplanage (10) qui est en forme de canal de glissement et qui est situé sur le corps (2).

2. Panneau aérodynamique sous le véhicule (1) selon la revendication 1, **caractérisé par** un panneau supplémentaire (4) qui comprend au moins un trou de pliage (7) et qui peut être fixé en étant plié vers la surface supérieure du corps (2).

3. Panneau aérodynamique sous le véhicule (1) selon la revendication 2, **caractérisé par** un corps (2) qui comprend au moins une patte de pliage (6) s'accrochant au panneau supplémentaire (4) en passant par le trou de pliage (7), et permettant ainsi de fixer le panneau supplémentaire (4) de cette manière après avoir été replié vers la surface supérieure du corps (2).

4. Panneau aérodynamique sous le véhicule (1) selon les revendications 2 et 3, **caractérisé par** un panneau supplémentaire (4) qui comprend au moins un trou de fixation (9).

5. Panneau aérodynamique sous le véhicule (1) selon l'une quelconque des revendications 4 à 6, **caractérisé par** un corps (2) qui comprend au moins une patte de fixation (8) permettant de relier le panneau supplémentaire (4) et le corps (2) en passant par le trou de fixation (9), et permettant ainsi d'élargir la surface.

6. Panneau aérodynamique sous le véhicule (1) selon l'une quelconque des revendications 2 à 5, **caractérisé par** au moins un élément de montage (12) qui permet de monter le panneau supplémentaire (4) sur le corps (2).

7. Panneau aérodynamique sous le véhicule (1) selon la revendication 1, **caractérisé par** au moins un élément de montage (12) qui permet au panneau supplémentaire (4) d'être monté après sa connexion au corps (2).
